# EUROPEAN PATENT APPLICATION

(11) **EP 4 753 008 A1**
(43) Date of publication of application: **03.06.2026**
(21) Application number: 23952663.5
(22) Date of filing: 21.09.2023
(51) Int. Cl.: H01M 10/058, H01M 50/242

(54) **BUFFER MEMBER, BATTERY CELL, BATTERY, AND ELECTRICAL APPARATUS**

(71) Applicant: Contemporary Amperex Technology Co., Limited, Ningde, Fujian 352100 (CN)
(72) Inventor: LANG, Yaqiang, Ningde, Fujian 352100 (CN); LIN, Chenhui, Ningde, Fujian 352100 (CN); SHI, Haihong, Ningde, Fujian 352100 (CN); HE, Jianfu, Ningde, Fujian 352100 (CN); YE, Yonghuang, Ningde, Fujian 352100 (CN)
(74) Representative: Lorenz Seidler Gossel Part. mbB
(86) International application number: PCT/CN2023/120506
(87) International publication number: WO 2025/060007

(57) **Abstract**

A buffer member (10), a battery cell (100), a battery (1000), and an electrical apparatus (2000). The buffer member (10) is used inside the battery cell (100), and the battery cell (100) comprises an electrode assembly (20). The buffer member (10) comprises: a first surface (11) and a second surface (12) which are arranged opposite to each other; and through channels (14) penetrating through the first surface (11) and the second surface (12), wherein the buffer member (10) can be compressed for buffering the expansion of the electrode assembly (20), and the through channels (14) are used for increasing the compressibility of the buffer member (10).

## Description

### TECHNICAL FIELD

The present application relates to the field of battery technologies, and in particular, to a buffer member, a battery cell, a battery, and an electrical apparatus.

### BACKGROUND

During a charge and discharge cycle of an electrode assembly, an electrode sheet expands repeatedly, and an expansion force of the electrode sheet acts on a housing, causing expansion and deformation of the housing. Consequently, the electrode sheet is likely to wrinkle, causing a problem of lithium precipitation or sodium precipitation of the electrode assembly during the cycle.

In a related technology, a buffer pad is usually placed in a battery cell. However, a structural design of the buffer pad is improper, making it difficult to resolve the problem of lithium precipitation or sodium precipitation caused by wrinkling of the electrode sheet. In addition, in a later stage of the cycle of the electrode assembly, the expansion force is too large and the problem of lithium precipitation or sodium precipitation caused by wrinkling of the electrode sheet is serious, which affects performance and service life of the battery cell.

### SUMMARY

Embodiments of the present application provide a buffer member, a battery cell, a battery, and an electrical apparatus. By increasing compressibility of the buffer member, an occupied space can be reduced to reduce an expansion force.

According to a first aspect, an embodiment of the present application provides a buffer member, used inside a battery cell, wherein the battery cell comprises an electrode assembly, and the buffer member comprises: a first surface and a second surface that are disposed opposite to each other; and a through channel penetrating through the first surface and the second surface, wherein the buffer member is compressible for buffering expansion of the electrode assembly, and the through channel is configured to increase compressibility of the buffer member.

In the above technical solution, the buffer member is disposed, so that a good support effect can be provided for the electrode assembly when expansion of the electrode assembly is small, to reduce deformation of an electrode sheet and ameliorate an electrode sheet wrinkling phenomenon caused by expansion of the electrode assembly, thereby alleviating the problem of lithium precipitation or sodium precipitation of the electrode assembly during a cycle, and improving performance of the battery cell. In addition, the through channel is disposed to increase the compressibility of the buffer member, so that the buffer member can be effectively compressed to reduce the occupied space when the electrode assembly expands greatly. A buffering effect balances expansion, and deformation of the electrode assembly is accommodated, so that the expansion force is less prone to be too large to cause the problem of interface lithium precipitation or sodium precipitation, and the electrode sheet is also less prone to deform to cause lithium precipitation or sodium precipitation, thereby effectively improving cycle performance of the battery cell.

In some embodiments, the buffer member has a pressure bearing surface facing or facing away from the electrode assembly, and the first surface and/or the second surface are/is the pressure bearing surface.

In the above technical solution, the surface on which an end opening of the through channel is formed is used as the pressure bearing surface, so that an actual force bearing area of the pressure bearing surface is reduced, and a force bearing surface pressure per unit area is increased, thereby more effectively increasing the compressibility of the buffer member, and solving the problems of large expansion force and volume occupation by the buffer member in a later stage of the cycle.

In some embodiments, a total opening area of an end opening that is of the through channel and that is formed on a same-side surface is S1, an area of the corresponding surface is S2, and S1 and S2 satisfy: S1/S2 is greater than or equal to 5% and less than or equal to 80%.

In the above technical solution, a quantity and volume of the through channels are reasonable, so as to consider both a support effect of the buffer member on the electrode assembly and an effect of increasing the compressibility.

In some embodiments, S1 and S2 further satisfy: S1/S2 is greater than or equal to 20% and less than or equal to 50%.

In the above technical solution, the support effect and the compressibility of the buffer member can be further improved.

In some embodiments, an equivalent diameter of an end opening of the through channel is greater than or equal to 2 mm and less than or equal to 20 mm.

In the above technical solution, the equivalent diameter of the end opening is prevented from being too large or too small, which can effectively improve overall structural strength of the buffer member and improve structural stability to improve the support capability, and is also conducive to effectively increasing the compressibility of the buffer member, thereby being more conducive to meeting the buffering requirements in a later stage of the cycle.

In some embodiments, the equivalent diameter of the end opening is greater than or equal to 5 mm and less than or equal to 10 mm.

In the above technical solution, the support capability and the compressibility of the buffer member can be further improved.

In some embodiments, there are a plurality of through channels, and at least two of the through channels intersect and communicate with each other.

In the above technical solution, the plurality of through channels enable hole structures to distributed on the buffer member more uniformly, which is conducive to improving compressibility uniformity and support stability of different regions of the buffer member. In addition, an intersecting arrangement manner has a better effect of increasing the compressibility of the buffer member.

In some embodiments, there are a plurality of through channels, and the plurality of through channels are spaced apart from each other.

In the above technical solution, the plurality of through channels enable hole structures to distributed on the buffer member more uniformly, which is conducive to improving compressibility uniformity and support stability of different regions of the buffer member. In addition, a spaced arrangement manner not only can improve distribution uniformity of the through channels on the buffer member to improve the support effect of the buffer member, but also can reduce processing difficulty of the through channels.

In some embodiments, the plurality of through channels all extend in a first direction, and the plurality of through channels are arranged in an array perpendicular to the first direction.

In the above technical solution, an array arrangement manner enables the plurality of through channels to be arranged more uniformly, and an effect of improving support stability and the compressibility is also more uniform.

In some embodiments, the buffer member comprises a first buffer region and a second buffer region, and at a same pressure, compressibility of the second buffer region is greater than compressibility of the first buffer region.

In the above technical solution, when the buffer member is used in the battery cell, the first buffer region and the second buffer region may respectively correspond to different regions of the electrode assembly, so as to balance an expansion force difference between different regions of the battery cell based on expansion situations of different regions of the electrode assembly, which is conducive to ameliorating the problem of interface lithium precipitation or sodium precipitation caused by non-uniform distribution of the expansion force, and improving long-term cycle stability of the battery cell.

In some embodiments, the through channel is disposed in the second buffer region.

In the above technical solution, while the expansion force difference between different regions is balanced, reducing the quantity of the through channels and improving the support capability of the buffer member are facilitated.

In some embodiments, a total volume of the through channel in the first buffer region is less than a total volume of the through channel in the second buffer region.

In the above technical solution, while balancing the expansion force difference between different regions, the first buffer region can also better adapt to the expansion of the electrode assembly in the later stage of the cycle.

In some embodiments, an equivalent aperture of the end opening of the through channel is d, in the first buffer region, a spacing between end openings of two adjacent through channels is greater than or equal to 2d and less than or equal to 4d, and in the second buffer region, a spacing between end openings of two adjacent through channels is greater than or equal to d/3 and less than or equal to 2d.

In the above technical solution, the through channels in the second buffer region are denser than the through channels in the first buffer region, so that the compressibility of the second buffer region is greater than the compressibility of the first buffer region. In addition, the end openings in the buffer regions are prevented from being arranged too densely to lead to weak structural strength of the corresponding buffer region, thereby ensuring support stability of the corresponding buffer region. In addition, the end openings are prevented from being arranged too sparsely to lead to failure to meet the requirements of the later stage of the cycle due to too low compressibility.

In some embodiments, the first buffer region has compressibility of not less than 40% at a pressure of 0.5 Mpa, compressibility of not less than 60% at a pressure of 0.8 Mpa, and compressibility of not less than 85% at a pressure of 1 Mpa; the second buffer region has compressibility of not less than 20% at a pressure of 0.5 Mpa, compressibility of not less than 30% at a pressure of 0.8 Mpa, and compressibility of not less than 50% at a pressure of 1 Mpa.

In the above technical solution, the first buffer region and the second buffer region can effectively balance the expansion force difference between different regions of the electrode assembly in the entire cycle period, thereby improving long-term cycle stability of the battery cell.

In some embodiments, the through channel penetrates through the buffer member in the first direction, there are two first buffer regions, the two first buffer regions are respectively located on two sides of the second buffer region in a second direction, and the first direction intersects the second direction.

In the above technical solution, the above arrangement manner of the first buffer regions and the second buffer region can satisfy the thickness difference that an expansion force at both ends is small and an expansion force in the middle is large in the second direction, and correspondingly, the electrode assembly may adopt a structure with the second electrode region in the middle and the first electrode regions at two sides in the second direction, so that both ends of the electrode assembly can fully exert electrical performance.

According to a second aspect, an embodiment of the present application further provides a battery cell, comprising a housing, an electrode assembly, and the buffer member described above, wherein both the buffer member and the electrode assembly are disposed in the housing.

In some embodiments, the electrode assembly comprises a plurality of electrode sheets that are wound, an outer peripheral surface of the electrode assembly comprises a straight portion and a curved portion connected to an end of the straight portion, and at least one of the straight portion and the curved portion is disposed opposite to the buffer member.

In the above technical solution, the buffer member can buffer and support at least one of the straight portion and the curved portion, thereby reducing a risk of bridge breakage and lithium precipitation of the electrode assembly.

In some embodiments, the electrode assembly comprises a plurality of positive electrode sheets and a plurality of negative electrode sheets that are stacked in a first direction, and the buffer member is disposed opposite to a surface on at least one side of the electrode assembly in the first direction.

In the above technical solution, the buffer member can effectively buffer and support a stacked electrode assembly, and the buffer member requires a small area, resulting in low cost.

In some embodiments, there are a plurality of electrode assemblies arranged in the first direction, and the buffer member is disposed between two adjacent electrode assemblies, and/or the buffer member is disposed between the electrode assembly and the housing.

In some embodiments, an end opening of the through channel is formed on a pressure bearing surface of the buffer member, and in a region that is of the electrode assembly and that is opposite to the pressure bearing surface, a stacking direction of electrode sheets is perpendicular to the pressure bearing surface.

In the above technical solution, during use, the electrode sheets are more prone to expand in the stacking direction. By causing the stacking direction of the electrode sheets in the region opposite to the pressure bearing surface to be perpendicular to the pressure bearing surface, the pressure bearing surface can more fully provide buffering and support for the electrode sheets, thereby improving the effect of reducing wrinkling of the electrode sheets.

In the above technical solution, the buffer member can not only support and buffer the electrode assembly, but also space the electrode assembly apart from the housing or an adjacent electrode assembly, so that the electrode assembly is not prone to squeeze the housing or squeeze against another electrode assembly after expansion.

In some embodiments, the buffer member and the electrode assembly are arranged in the first direction, and surfaces on two sides of the electrode assembly in the first direction are largest-area surfaces.

In the above technical solution, by causing the buffer member to face the largest-area surfaces of the electrode assembly, the buffer member can provide support in the region of the electrode assembly that is more prone to expand and deform, and can be compressed for avoidance to effectively reduce the expansion force. In addition, this is conductive to reducing a usage amount of the buffer member, thereby reducing costs, reducing the occupied space, and improving an energy density.

In some embodiments, the buffer member is disposed on a side surface of the electrode assembly in the first direction, the electrode assembly comprises an electrode body and a tab disposed at an end of the electrode body, the electrode body comprises a first electrode region and a second electrode region, a quantity of layers of electrode sheets in the first electrode region in the first direction is less than a quantity of layers of electrode sheets in the second electrode region in the first direction, the buffer member has a first buffer region and a second buffer region, the first buffer region is disposed corresponding to the first electrode region, the second buffer region is disposed corresponding to the second electrode region, and compressibility of the first buffer region is less than compressibility of the second buffer region.

In the above technical solution, the first electrode region squeezes the first buffer region, and the second electrode region squeezes the second buffer region. This effectively balances a difference in expansion forces corresponding to the first electrode region and the second electrode region, ameliorates the problem of interface lithium precipitation or sodium precipitation caused by the non-uniform expansion force of the battery body, balances a thickness difference between the first electrode region and the second electrode region, and improves long-term cycle stability of the battery body.

In some embodiments, there are two first buffer regions, the two first buffer regions are respectively located on two sides of the second buffer region in a second direction, the first direction intersects the second direction, and in the second direction, a dimension of the first buffer region is H1, a dimension of the second buffer region is H2, and a dimension of the electrode body is H3, wherein H3 - (H2 + 2H1) is greater than or equal to -2.5 mm and less than or equal to 14.5 mm, and H1 is greater than or equal to 3.5 mm and less than or equal to 5.5 mm.

In the above technical solution, the buffer member can provide stable support for the expansion-prone region of the electrode body, and provide more accurate support and buffering for a region with a larger expansion force and a region with a smaller expansion force, which is conducive to reducing the volume of the buffer member and reducing the occupied space and cost.

In some embodiments, H3 - (H2 + 2H1) is greater than or equal to 6.5 mm and less than or equal to 10 mm.

In the above technical solution, comprehensive support and buffering effect of the buffer member on the electrode body can be further improved, and the effect of reducing the space occupied by the buffer member is better.

In some embodiments, the electrode assembly comprises a positive electrode sheet, a negative electrode sheet, and a separator disposed between the positive electrode sheet and the negative electrode sheet, the first electrode region comprises the positive electrode sheet, the separator, and the negative electrode sheet that are stacked; and the second electrode region comprises the negative electrode sheet and the separator that are stacked, or the second electrode region comprises the negative electrode sheet.

In the above technical solution, the negative electrode sheet has a large dimension, which is conducive to enabling the negative electrode sheet to fully receive lithium ions provided by the positive electrode sheet, thereby fully exerting electrical performance of a positive electrode material and ameliorating the problem of lithium precipitation.

In some embodiments, the buffer member is disposed on a side surface of the electrode assembly in the first direction, the electrode assembly comprises an electrode body and a tab disposed at an end of the electrode body, the electrode body comprises a third electrode region and a fourth electrode region, a thickness of an electrode sheet of the electrode assembly in the third electrode region is less than a thickness in the fourth electrode region, the buffer member has a third buffer region and a fourth buffer region, the third buffer region is disposed corresponding to the third electrode region, the fourth buffer region is disposed corresponding to the fourth electrode region, and compressibility of the third buffer region is less than compressibility of the fourth buffer region.

In the above technical solution, by causing the third buffer region with smaller compressibility to be opposite to the third electrode region with smaller expansion, and causing the fourth buffer region with larger compressibility to be opposite to the fourth electrode region with greater expansion, the third electrode region squeezes the third buffer region, and the fourth electrode region squeezes the fourth buffer region. This effectively balances a difference in expansion forces corresponding to the third electrode region and the fourth electrode region, ameliorates the problem of interface lithium precipitation or sodium precipitation caused by the non-uniform expansion force of the battery cell, balances a difference in thickness between the third electrode region and the fourth electrode region, and improves long-term cycle stability of the battery cell.

In some embodiments, there are two third buffer regions, the two third buffer regions are respectively located on two sides of the fourth buffer region in a second direction, the first direction intersects the second direction, and in the second direction, a dimension of the third buffer region is H4, a dimension of the fourth buffer region is H5, and a dimension of the electrode body is H3, wherein H3 - (H5 + 2H4) is greater than or equal to -2.5 mm and less than or equal to 20 mm, and H4 is greater than or equal to 1 mm and less than or equal to 10 mm.

In the above technical solution, within the above value range, the buffer member can provide stable support for the expansion-prone region of the electrode body, and provide more accurate support and buffering for a region with a larger expansion force and a region with a smaller expansion force, which is conducive to reducing the volume of the buffer member and reducing the occupied space and cost. In addition, the electrical performance of the electrode assembly is also considered, and accumulation of the active material in the rolling process is reduced.

In some embodiments, H3 - (H5 + 2H4) is greater than or equal to 6.5 mm and less than or equal to 13 mm.

In the above technical solution, comprehensive support and buffering effect of the buffer member on the electrode body can be further improved, and the effect of reducing the space occupied by the buffer member is better.

According to a third aspect, an embodiment of the present application further provides a battery, comprising the battery cell described above.

According to a fourth aspect, an embodiment of the present application further provides an electrical apparatus, including the battery described above. The battery is configured to provide electric energy to the electrical apparatus.

### BRIEF DESCRIPTION OF THE DRAWINGS

FIG. 1 to FIG. 2 are schematic structural diagrams of a battery cell according to an embodiment of the present application;
FIG. 3 is a cross-sectional view of a battery cell according to some embodiments of the present application in a direction indicated by line A-A in FIG. 2;
FIG. 4 is a cross-sectional view of a battery cell according to some embodiments of the present application in a direction indicated by line B-B in FIG. 2;
FIG. 5 is a cross-sectional view of a battery cell according to some other embodiments of the present application in a direction indicated by line B-B in FIG. 2;
FIG. 6 is a cross-sectional view of a battery cell according to still other embodiments of the present application in a direction indicated by line B-B in FIG. 2;
FIG. 7 is a schematic structural diagram of a buffer member according to a first embodiment of the present application;
FIG. 8 is a schematic structural diagram of a buffer member according to a second embodiment of the present application;
FIG. 9 is a schematic structural diagram of a buffer member according to a third embodiment of the present application;
FIG. 10 is a schematic structural diagram of a buffer member according to a fourth embodiment of the present application;
FIG. 11 is a schematic structural diagram of a buffer member according to a fifth embodiment of the present application;
FIG. 12 is a schematic structural diagram of a buffer member according to a sixth embodiment of the present application;
FIG. 13 is a schematic structural diagram of a buffer member and an electrode assembly according to a seventh embodiment of the present application;
FIG. 14 is a schematic structural diagram of a buffer member according to a seventh embodiment of the present application;
FIG. 15 is a schematic structural diagram of a buffer member according to an eighth embodiment of the present application;
FIG. 16 is a partial schematic structural diagram of an electrode assembly according to an embodiment of the present application;
FIG. 17 is a schematic diagram of a battery according to an embodiment of the present application; and
FIG. 18 is a schematic diagram of a vehicle according to an embodiment of the present application.

### Reference numerals:

Battery 1000; Electrical apparatus 2000;
Battery cell 100;
Buffer member 10; First surface 11; Second surface 12; Pressure bearing surface 13; Through channel 14; First buffer region 15; Second buffer region 16; Third buffer region 17; Fourth buffer region 18;
Electrode assembly 20; Electrode body 21; First electrode region 211; Second electrode region 212; Tab 22; Positive electrode sheet 23; Negative electrode sheet 24; Separator 25; Straight portion 26; Curved portion 27;
Housing 30;
First direction F1; Second direction F2; Third direction F3.

### DETAILED DESCRIPTION OF PREFERRED EMBODIMENTS

To make the objectives, technical solutions, and advantages of embodiments of the present application clearer, the following clearly describes the technical solutions in the embodiments of the present application with reference to the drawings in the embodiments of the present application. Clearly, the described embodiments are some but not all of the embodiments of the present application. All other embodiments obtained by those skilled in the art based on the embodiments of the present application without making creative efforts shall fall within the protection scope of the present application.

Unless otherwise defined, all technical and scientific terms used in the present application have the same meaning as commonly understood by those skilled in the art to which the present application belongs. The terms used in the description of the present application herein are merely for the purpose of describing specific embodiments and are not intended to limit the present application. The terms "include", "be provided with", and any other variants thereof in the specification, claims, and accompanying drawings of the present application are intended to cover a non-exclusive inclusion. The terms "first", "second", and the like in the description and claims of the present application or in the drawings are used to distinguish between different objects, and are not used to describe a specific sequence or a primary-secondary relationship.

An "embodiment" in the present application means that a specific feature, structure, or characteristic described with reference to the embodiment may be included in at least one embodiment of the present application. The phrase in various places in the description does not necessarily all refer to the same embodiment, or a separate or alternative embodiment mutually exclusive of other embodiments.

In the description of the present application, it should be further noted that, unless explicitly specified and defined otherwise, the terms "mounted", "connected", "connect", and "attached" are to be understood in a broad sense. For example, it may be fixed connection, detachable connection, or integral connection; it may be direct connection, may be indirect connection through an intermediate medium, or may be internal communication between two elements. Those skilled in the art can understand specific meanings of these terms in the present application according to specific situations.

In the present application, the term "and/or" is only an associative relationship for describing associated objects, indicating that three relationships may be present. For example, A and/or B may indicate the following three cases: presence of only A, presence of both A and B, and presence of only B. In addition, the symbol "/" in the present application generally represents an "or" relationship between associated objects.

In the embodiments of the present application, the same reference numerals denote the same component, and a detailed description of the same component is omitted in different embodiments for the sake of brevity. It should be understood that the dimensions of various components, such as the thickness, length, and width, and the dimensions of an integrated device, such as the overall thickness, length, and width, in the embodiments of the present application shown in the figures are merely illustrative and should not be construed as limiting the present application.

The term "a plurality of" in the present application refers to more than two (including two).

In the present application, a battery refers to a single physical module that includes one or more battery cells to provide a higher voltage and capacity. For example, the battery mentioned in the present application may include a battery module or a battery pack, etc. Some batteries may include a case for encapsulating one or more battery cells or a plurality of battery modules. The box can prevent liquids or other foreign objects from affecting the charging or discharging of the battery cells. Of course, some batteries may not include the above case, and are directly disposed in a battery mounting compartment of an electrical apparatus.

In the present application, the battery cell may include a lithium-ion secondary battery, a lithium-ion primary battery, a lithium-sulfur battery, a sodium-lithium ion battery, a sodium-ion battery, a magnesium-ion battery, or the like, which is not limited in the embodiments of the present application. The battery cell may be in a shape of a cylinder, a flat body, a cuboid, or the like, which is not limited in the embodiments of the present application. The battery cells are generally classified into three types in terms of packaging manner: cylindrical battery cells, prismatic battery cells, and pouch battery cells, which are not limited in the embodiments of the present application.

For example, the battery cell may include a housing, an electrode assembly, and an electrolyte, where the housing is configured to accommodate the electrode assembly and the electrolyte. The electrode assembly is formed by winding or stacking a positive electrode sheet, a negative electrode sheet, and a separator. Working of the battery cell mainly relies on migration of metal ions between the positive electrode sheet and the negative electrode sheet. The positive electrode sheet includes a positive electrode current collector and a positive electrode active material layer. A surface of the positive electrode current collector is coated with the positive electrode active material layer. A portion that is of the positive electrode current collector and that is not coated with the positive electrode active material layer protrudes from a portion that is of the positive electrode current collector and that is coated with the positive electrode active material layer, and the portion that is of the positive electrode current collector and that is not coated with the positive electrode active material layer is used as a positive electrode tab. A lithium-ion battery is used as an example, for which, the positive electrode current collector may be made of aluminum, and the positive electrode active material may be lithium cobalt oxide, lithium iron phosphate, ternary lithium, lithium manganate oxide, or the like.

The negative electrode sheet includes a negative electrode current collector and a negative electrode active material layer. A surface of the negative electrode current collector is coated with the negative electrode active material layer. A portion that is of the negative electrode current collector and that is not coated with the negative electrode active material layer protrudes from a portion that is of the negative electrode current collector and that is coated with the negative electrode active material layer, and the portion that is of the negative electrode current collector and that is not coated with the negative electrode active material layer is used as a negative electrode tab. The negative electrode current collector may be made of copper, and the negative electrode active material may be carbon, silicon, or the like. To ensure that a large current passes through without any fusing, a plurality of positive electrode tabs are provided and stacked together, and a plurality of negative electrode tabs are provided and stacked together.

The separator may be made of PP (polypropylene, polypropylene), PE (polyethylene, polyethylene), or the like. In addition, the electrode assembly may be a wound structure or a stacked structure, and the embodiments of the present application are not limited thereto.

The battery cell may be provided with an electrode post that is connected to the tab and that serves as an electrical connection portion of the battery cell. In addition, the battery cell may have a pressure relief portion. When an internal pressure of the battery cell is excessively high (for example, thermal runaway), the pressure relief portion is configured to release an internal material (for example, a gas, a liquid, or a particulate matter) of the battery cell, to reduce the internal pressure of the battery cell, and avoid a dangerous accident such as battery cell explosion caused by too rapid pressurization inside the battery cell. For example, the pressure relief portion may be an explosion-proof valve, an explosion-proof sheet, or the like.

During charge and discharge cycle operation of an electrode assembly, an electrode sheet expands repeatedly, and an expansion force of the electrode sheet acts on a housing, thereby causing the housing to expand and deform. The larger a main plane of the housing, the more severe deformation of a wall of the housing. The electrode sheet is prone to wrinkle, which causes the problem of lithium precipitation or sodium precipitation of the electrode assembly during the cycle.

In some related technologies, a buffer pad is placed in a battery cell, but the structure design of the buffer pad is unreasonable, and it is difficult to solve the problem of lithium precipitation or sodium precipitation caused by the wrinkling of the electrode sheet. In addition, in a later stage of the cycle of the electrode assembly, the expansion force is too large and the problem of lithium precipitation or sodium precipitation caused by wrinkling of the electrode sheet is serious, which affects performance and service life of the battery cell.

In some other related technologies, an elastic support plate is placed in the battery cell to solve the problem of not tight contact between the positive and negative electrode sheets and the separator during the charging and discharging cycle of the electrode assembly. However, the elastic support plate occupies a large internal space of the battery cell, thereby affecting an energy density of the battery cell. In addition, the elastic support plate has poor compressibility, thereby leading to a risk of a sharp increase in expansion force in a later stage of the life of the battery cell.

Based on this, the present application provides a buffer member 10, which is used inside a battery cell 100. The battery cell 100 includes an electrode assembly 20, and the buffer member 10 includes a first surface 11 and a second surface 12 that are disposed opposite to each other. The buffer member 10 includes a through channel 14, and the through channel 14 penetrates through the first surface 11 and the second surface 12. The buffer member 10 is compressible to buffer expansion of the electrode assembly 20, and the through channel 14 is configured to increase compressibility of the buffer member 10.

In the buffer member 10 having such a structure, the buffer member 10 is disposed, so that a good support effect can be provided for the electrode assembly 20 when expansion of the electrode assembly 20 is small, to reduce deformation of an electrode sheet and ameliorate an electrode sheet wrinkling phenomenon caused by expansion of the electrode assembly 20, thereby alleviating the problem of lithium precipitation or sodium precipitation of the electrode assembly 20 during the cycle and improving performance of the battery cell 100. In addition, the through channel 14 is disposed to increase the compressibility of the buffer member 10, so that the buffer member 10 can be effectively compressed to reduce the occupied space when the electrode assembly 20 expands greatly. A buffering effect balances expansion, and deformation of the electrode assembly 20 is accommodated, so that the expansion force is less prone to be too large to cause the problem of interface lithium precipitation or sodium precipitation, and the electrode sheet is also less prone to deform to cause lithium precipitation or sodium precipitation, thereby effectively improving cycle performance of the battery cell 100.

The buffer member 10 disclosed in the embodiment of the present application may be used for a battery cell 100, the battery cell 100 may be used for a battery 1000, and the battery 1000 may be used, but is not limited to, in an electrical apparatus 2000 such as a vehicle, a ship, or an aircraft, and the battery 1000 disclosed in the embodiment of the present application and the like may constitute a power supply system of the electrical apparatus 2000, so as to ensure use safety and reliability of the electrical apparatus 2000.

For example, the electrical apparatus 2000 disclosed in the embodiment of the present application may be, but is not limited to, a vehicle, a mobile phone, a tablet computer, a notebook computer, a ship, a spacecraft, an electric toy, an electric tool, and the like. The vehicle may be a fuel vehicle, a gas vehicle, a new energy vehicle, or a rail vehicle, where the new energy vehicle may be a pure electric vehicle, a hybrid electric vehicle, an enhanced-range vehicle, or the like. The spacecraft may include aircrafts, rockets, space shuttles, spaceships, and the like. The electric toy may include stationary or mobile electric toys, such as game machines, electric vehicle toys, electric ship toys, electric airplane toys, and the like. The electric tool may include metal cutting electric tools, grinding electric tools, assembly electric tools, and electric tools for railways, such as electric drills, electric sanders, electric wrenches, electric screwdrivers, electric hammers, impact drills, concrete vibrators, electric planers, and the like.

Hereinafter, a buffer member 10 according to an embodiment of a first aspect of the present application and a battery cell 100 according to an embodiment of a second aspect are described with reference to the drawings.

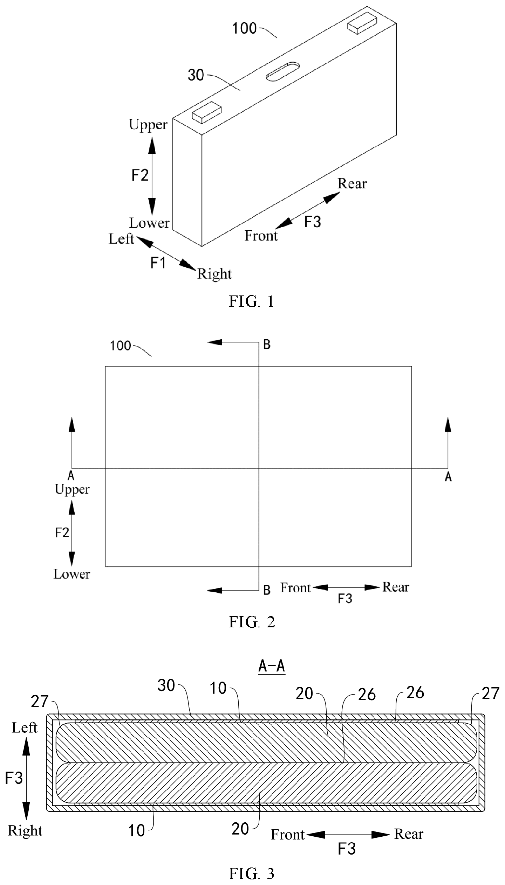

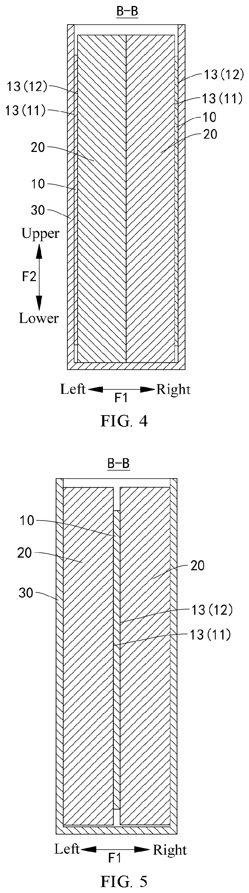

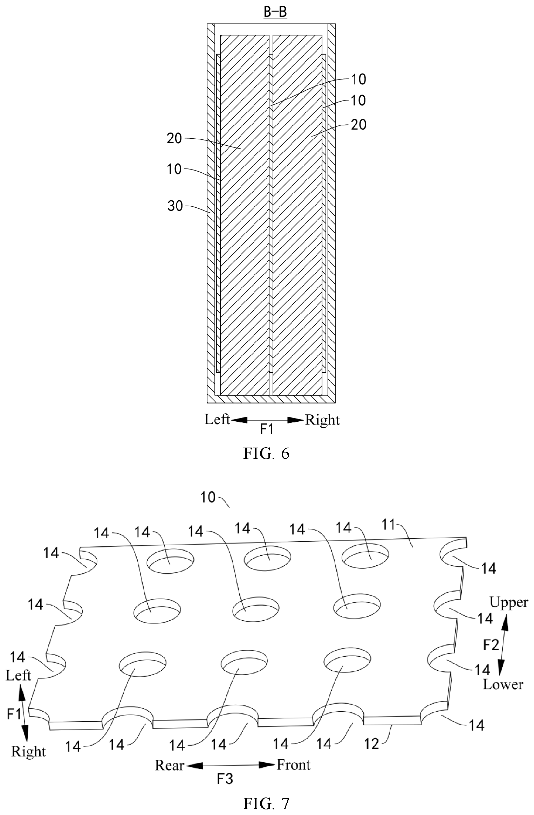

As shown in FIG. 1 to FIG. 6, FIG. 1 to FIG. 2 are schematic structural diagrams of a battery cell 100 according to an embodiment of the present application; FIG. 3 and FIG. 4 are respectively cross-sectional views of a battery cell 100 according to some embodiments of the present application in a direction indicated by line A-A and a direction indicated by line B-B in FIG. 2; FIG. 5 is a cross-sectional view of a battery cell 100 according to some other embodiments of the present application in a direction indicated by line B-B in FIG. 2; and FIG. 6 is a cross-sectional view of a battery cell 100 according to still other embodiments of the present application in a direction indicated by line B-B in FIG. 2. The buffer member 10 according to the embodiment of the present application is used inside the battery cell 100, the buffer member 10 includes a first surface 11 and a second surface 12 that are disposed opposite to each other. In addition, the buffer member 10 includes a through channel 14, and the through channel 14 penetrates through the first surface 11 and the second surface 12. The battery cell 100 includes an electrode assembly 20, the buffer member 10 is compressible to buffer expansion of the electrode assembly 20, and the through channel 14 is configured to increase compressibility of the buffer member 10.

The buffer member 10 is used inside the battery cell 100. For example, in some embodiments, the battery cell 100 may include a housing 30, an electrode assembly 20, and a buffer member 10, and both the buffer member 10 and the electrode assembly 20 are disposed in the housing 30. In this way, the buffer member 10 is closer to the electrode assembly 20, so it is convenient to provide buffering for expansion of the electrode assembly 20 in time, thereby reducing increase of an expansion force of the electrode assembly 20 during use, ameliorating the problem of non-uniform force distribution of the electrode assembly 20 during use, and improving service life and reliability of the electrode assembly 20.

The buffer member 10 may be disposed between the electrode assembly 20 and the housing 30, as shown in FIG. 3, FIG. 4, and FIG. 6. In this way, the buffer member 10 can not only support and buffer the electrode assembly 20, but also space the electrode assembly 20 apart from the housing 30, so that the electrode assembly 20 is less prone to squeeze the housing 30 after expansion.

Alternatively, the buffer member 10 may be disposed between electrode assemblies 20, for example, as shown in FIG. 5 and FIG. 6, there are a plurality of electrode assemblies 20 arranged in a first direction F1, and the buffer member 10 is disposed between two adjacent electrode assemblies 20. In this way, the buffer member 10 can not only support and buffer the electrode assembly 20, but also space adjacent electrode assemblies 20 apart, so that the electrode assemblies 20 are less prone to squeeze against each other after expansion.

Of course, the buffer member 10 may alternatively be, as shown in FIG. 6, partially disposed between the electrode assembly 20 and the housing 30, and partially disposed between adjacent electrode assemblies 20, which is also within the protection scope of the present application. It should be noted that the buffer member 10 disposed between the electrode assembly 20 and the housing 30 and the buffer member 10 disposed between adjacent electrode assemblies 20 may be different portions of a same buffer member 10, or may be different independent buffer members 10.

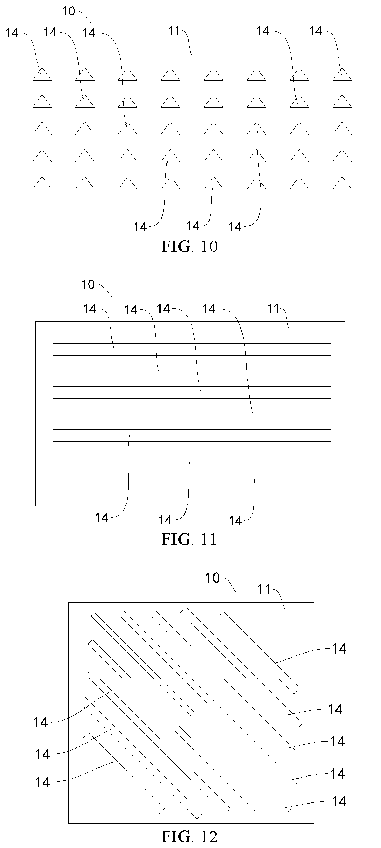

The first surface 11 and the second surface 12 that are disposed opposite to each other refer to surfaces of the buffer member 10 located on two sides in a set direction. For example, in FIG. 7 to FIG. 12 which are schematic structural diagrams of a buffer member 10 according to first to sixth embodiments of the present application, the first surface 11 and the second surface 12 are surfaces of the buffer member 10 on two sides in the first direction F1. Of course, in some other embodiments, the first surface 11 and the second surface 12 may alternatively be surfaces of the buffer member 10 on two sides in a second direction F2 or a third direction F3 shown in FIG. 7 to FIG. 12, where the first direction F1, the second direction F2, and the third direction F3 intersect each other, for example, are perpendicular to each other.

The through channel 14 penetrates through the first surface 11 and the second surface 12, that is, end openings of the through channel 14 are respectively formed on the first surface 11 and the second surface 12. An extending path of the through channel 14 from the first surface 11 to the second surface 12 is not limited. For example, the through channel 14 may extend along a straight line as shown in FIG. 7 to FIG. 12, or the through channel 14 may extend along a path such as a broken line or a curve. The shape of the end opening includes, but is not limited to, a circular shape, a rectangular shape, a trapezoidal shape, a triangular shape, or the like shown in FIG. 7 to FIG. 12.

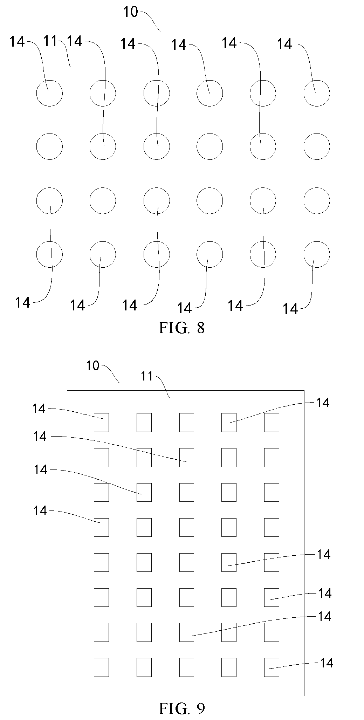

In addition, a side wall of the through channel 14 may be, as shown in FIG. 8 to FIG. 12, a closed annular surface extending continuously, that is, the side wall is a closed wall surface in any direction perpendicular to the extending path of the through channel 14, which is conducive to improving support stability of the buffer member 10 for the electrode assembly 20 in an early stage of the cycle of the electrode assembly 20. Alternatively, a side opening may be formed on the side wall of the through channel 14, as shown in FIG. 7, the through channel 14 disposed at the edge of the buffer member 10 is open on three sides, which is easier to process.

The buffer member 10 is compressible, that is, the buffer member 10 can be compressed to deform when subjected to an external force, so as to reduce the occupied space. When the external force is removed, deformation may be at least partially restored, so as to provide stable support for the electrode assembly 20.

The compressibility of the buffer member 10 refers to a ratio of a reduced volume of the buffer member 10 when the buffer member 10 is compressed to a volume of the buffer member 10 in a natural state.

The through channel 14 is configured to increase the compressibility of the buffer member 10, that is, compared with a buffer member of a same specification and a same material without a through channel, the compressibility of the buffer member 10 is increased, so that the buffer member 10 can be further compressed, and the volume of the buffer member 10 is further reduced.

In some embodiments, the buffer member 10 may be made of an elastically deformable material, which achieves compression by utilizing material characteristics and further increases the compressibility in combination with the through channel 14. For example, the material of the buffer member 10 includes, but is not limited to, polyethylene, polypropylene, polyethylene terephthalate, aerogel, foamed material, silicone rubber, and the like. The above materials are strong in pressure resistance and electrolyte resistance, low in cost, and convenient for production and manufacturing.

In the early stage of the cycle of the electrode assembly 20, the buffer member 10 has a good support effect on the electrode assembly 20, which can reduce deformation of the electrode sheet, thereby ameliorating the electrode sheet wrinkling phenomenon caused by expansion of the electrode assembly 20, and alleviating the problem of lithium precipitation or sodium precipitation of the electrode assembly 20 during the cycle.

As the electrode assembly 20 is repeatedly cycled, the buffer member 10 is compressed under an expansion action of the electrode assembly 20 to reduce the occupied space while maintaining the support effect on the electrode assembly 20. In addition, by disposing the through channel 14 on the buffer member 10, the buffer member 10 can be further compressed and the volume can be further reduced, so that space that is in the housing 30 and that is occupied by the buffer member 10 is reduced. Consequently, there is enough space in the housing 30 to accommodate deformation of the electrode assembly 20, thereby adapting to the expansion force of the electrode assembly 20 that increases in the later stage of the cycle, preventing lithium precipitation or sodium precipitation caused by too large expansion force, and facilitating improvement of the cycle performance of the electrode assembly 20.

According to the buffer member 10 of the embodiment of the present application, the buffer member 10 is disposed, so that a good support effect can be provided for the electrode assembly 20 when expansion of the electrode assembly 20 is small, to reduce deformation of the electrode sheet and ameliorate the electrode sheet wrinkling phenomenon caused by expansion of the electrode assembly 20, thereby alleviating the problem of lithium precipitation or sodium precipitation of the electrode assembly 20 during the cycle and improving performance of the battery cell 100. In addition, the through channel 14 is disposed to increase the compressibility of the buffer member 10, so that the buffer member 10 can be effectively compressed to reduce the occupied space when the electrode assembly 20 expands greatly. A buffering effect balances expansion, and deformation of the electrode assembly 20 is accommodated, so that the expansion force is less prone to be too large to cause the problem of interface lithium precipitation or sodium precipitation, and the electrode sheet is also less prone to deform to cause lithium precipitation or sodium precipitation, thereby effectively improving cycle performance of the battery cell 100.

In some embodiments of the present application, as shown in FIG. 4 to FIG. 12, the buffer member 10 has a pressure bearing surface 13 facing or facing away from the electrode assembly 20, and the first surface 11 and/or the second surface 12 are/is the pressure bearing surface 13. The pressure bearing surface 13 is a squeezed surface of the buffer member 10 when the electrode assembly 20 expands. The pressure bearing surface 13 may be a surface that faces the electrode assembly 20 to directly support and bear pressure, or may be a surface that faces away from the electrode assembly 20 to indirectly bear pressure. For example, both a surface that is of the buffer member 10 and that faces the housing 30 and faces away from the electrode assembly 20 and a surface that is of the buffer member 10 and faces the electrode assembly 20 are the pressure bearing surfaces 13.

At least one of the first surface 11 and the second surface 12 is the pressure bearing surface 13, that is, the surface on which an end opening of the through channel 14 is formed is used as the pressure bearing surface 13, so that an actual force bearing area of the pressure bearing surface 13 is reduced, and a force bearing surface pressure per unit area is increased, thereby more effectively increasing the compressibility of the buffer member 10, and solving the problems of large expansion force and volume occupation by the buffer member 10 in a later stage of the cycle.

In some embodiments of the present application, a total opening area of the end openings that are of the through channels 14 and that are formed on a same-side surface is S1, and an area of the corresponding surface is S2. The total opening area of the end openings is a sum of areas of all the end openings. For example, if the end opening is in a circular shape, the radius of the circle is R, and n end openings with equal areas are disposed on the same-side surface, S1 is equal to nπR². The area of the surface is an area of the surface without the end openings. For example, if the first surface 11 is in a rectangular shape, an area of the first surface 11 is a product of the length and width of the rectangle.

In addition, S1 and S2 satisfy: S1/S2 is greater than or equal to 5% and less than or equal to 80%. Too many through channels 14 affect the support effect, and too few through channels 14 do not greatly increase the compressibility. Within the above ratio range, a quantity and volume of the through channels 14 are reasonable, so as to consider both the support effect of the buffer member 10 on the electrode assembly 20 and an effect of increasing the compressibility. For example, in some specific embodiments, S1/S2 may be 5%, 10%, 20%, 30%, 40%, 50%, 60%, 70%, 80%, or the like.

In some embodiments, S1 and S2 further satisfy: S1/S2 is greater than or equal to 20% and less than or equal to 50%, to further improve the support effect and increase the compressibility of the buffer member 10.

In some embodiments of the present application, an equivalent diameter of the end opening of the through channel 14 is greater than or equal to 2 mm and less than or equal to 20 mm. The equivalent diameter of the end opening refers to a diameter of a circle having a same cross-sectional area as the end opening. For example, when the end opening is in a circular shape, the equivalent diameter of the end opening may be a diameter of the circle. When the end opening is in a non-circular shape such as a triangular shape, the equivalent diameter of the end opening is a diameter of a circle having a same area as the non-circular shape such as the triangular shape.

In some specific embodiments, the equivalent diameter of the end opening may be 2 mm, 5 mm, 10 mm, 15 mm, 20 mm, or the like.

The equivalent diameter of the end opening is in a range of 2 mm to 20 mm, so that the equivalent diameter of the end opening is prevented from being too large or too small, which can effectively improve overall structural strength of the buffer member 10 and improve structural stability to improve the support capability, and is also conducive to effectively increasing the compressibility of the buffer member 10, thereby being more conducive to meeting the buffering requirements in a later stage of the cycle.

In some embodiments, the equivalent diameter of the end opening is further satisfies being greater than or equal to 5 mm and less than or equal to 10 mm, so as to further improve the support capability and increase the compressibility of the buffer member 10.

In the embodiment of the present application, the quantity and arrangement manner of the through channels 14 may be flexibly set.

For example, in some embodiments, as shown in FIG. 7 to FIG. 12, there are a plurality of through channels 14, that is, the quantity of the through channels 14 is two or more. In this case, when the total volume of the through channels 14 is constant, the cross-sectional area of each through channel 14 is smaller, which is conducive to ensuring structural strength and support capability of the buffer member 10 while increasing the compressibility. In addition, the plurality of through channels 14 enable hole structures to distributed on the buffer member 10 more uniformly, which is conducive to improving compressibility uniformity and support stability of different regions of the buffer member 10.

In some specific embodiments, at least two through channels 14 intersect and communicate with each other. For example, in the two intersecting through channels 14, one through channel 14 extends in the first direction F1, the other through channel 14 extends in the second direction F2, and the two through channels 14 pass through a same region on the buffer member 10 to communicate with each other. The intersecting arrangement manner has a better effect of increasing the compressibility of the buffer member 10.

It should be noted that, in the above embodiments, some of the plurality of through channels 14 may be spaced apart from and does not communicate with other through channels 14, or any one of the plurality of through channels 14 may intersect and communicate with at least one of other through channels 14, which falls within the protection scope of the present application.

In some other specific embodiments, the plurality of through channels 14 are spaced apart from each other. In other words, any two of the through channels 14 do not communicate with each other. In this way, uniformity of distribution of the through channels 14 on the buffer member 10 can be improved to improve the support effect of the buffer member 10, and processing difficulty of the through channels 14 can also be reduced.

For example, as shown in FIG. 7, the plurality of through channels 14 all extend in the first direction F1 to penetrate through the buffer member 10, and the plurality of through channels 14 are arranged in an array perpendicular to the first direction F1 to be spaced apart from each other. The array arrangement manner enables the plurality of through channels 14 to be arranged more uniformly, and an effect of improving support stability and the compressibility is also more uniform. For example, the plurality of through channels 14 may be arranged in a plurality of rows in the second direction F2, and each row includes a plurality of through channels 14 arranged in the third direction F3.

Of course, in the embodiment including a plurality of through channels 14, extension directions of the plurality of through channels 14 may be the same or different, provided that a requirement that the plurality of through channels 14 do not communicate with each other is satisfied.

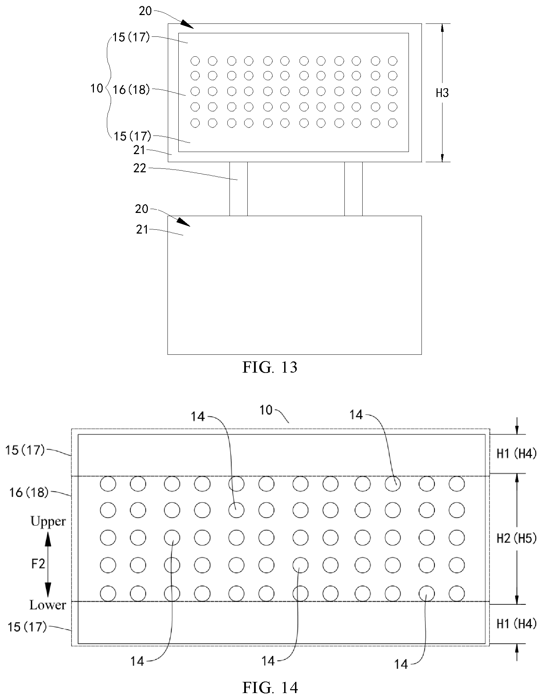

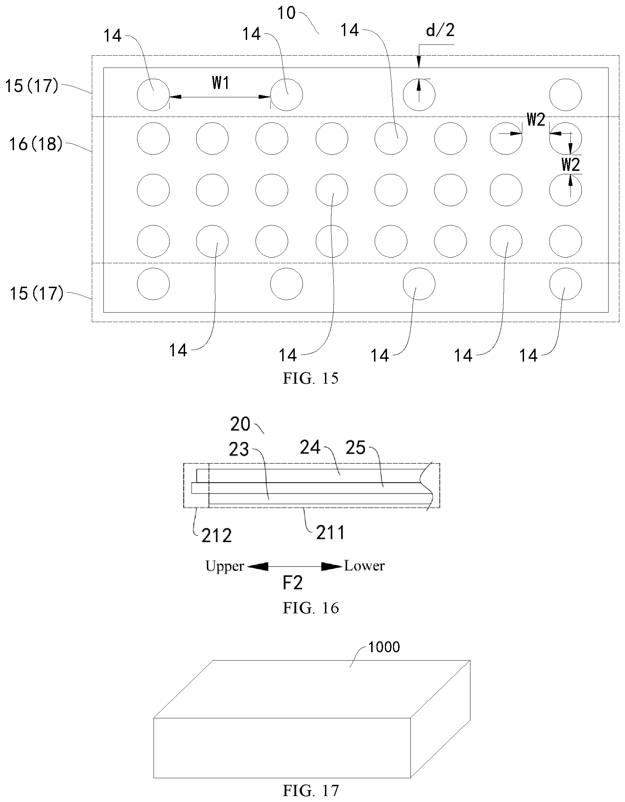

According to some embodiments of the present application, referring to FIG. 13 to FIG. 15. FIG. 13 is a schematic structural diagram of a buffer member 10 and an electrode assembly 20 according to a seventh embodiment of the present application. FIG. 14 is a schematic structural diagram of a buffer member 10 according to a seventh embodiment of the present application; FIG. 15 is a schematic structural diagram of a buffer member 10 according to an eighth embodiment of the present application. The buffer member 10 includes a first buffer region 15 and a second buffer region 16, for ease of understanding, the first buffer region 15 and the second buffer region 16 are marked and divided by dashed boxes in FIG. 14 and FIG. 15, and it may be understood that the dashed boxes are not structures of the buffer member 10.

At a same pressure, the compressibility of the second buffer region 16 is greater than the compressibility of the first buffer region 15. In other words, at the same pressure, volume reduction of the second buffer region 16 is greater than that the first buffer region. For the electrode assembly 20 of the battery cell 100, different regions of the electrode assembly 20 expand differently during the cycle of the electrode assembly 20. For example, there is a difference between expansion of a center and expansion of an edge, and expansion of the center is greater than expansion of the edge. For another example, expansion of a region with a larger active material coating thickness of the electrode sheet is greater than expansion of a region with a smaller active material coating thickness.

Therefore, when the buffer member 10 is used in the battery cell 100, the first buffer region 15 and the second buffer region 16 may respectively correspond to different regions of the electrode assembly 20, so as to balance an expansion force difference between different regions of the battery cell 100 based on expansion situations of different regions of the electrode assembly 20, which is conducive to ameliorating the problem of interface lithium precipitation or sodium precipitation caused by non-uniform distribution of the expansion force, and improving long-term cycle stability of the battery cell 100.

In some embodiments of the present application, referring to FIG. 13 to FIG. 16, FIG. 16 is a partial schematic structural diagram of an electrode assembly 20 according to an embodiment of the present application. The buffer member 10 is disposed on a side surface of the electrode assembly 20 in the first direction F1, and the electrode assembly 20 includes an electrode body 21 and a tab 22 disposed at an end of the electrode body 21. The electrode body 21 includes a first electrode region 211 and a second electrode region 212, and a quantity of layers of electrode sheets in the first electrode region 211 in the first direction F1 is less than a quantity of layers of electrode sheets in the second electrode region 212 in the first direction F1. The buffer member 10 has a first buffer region 15 and a second buffer region 16, the first buffer region 15 is disposed corresponding to the first electrode region 211, the second buffer region 16 is disposed corresponding to the second electrode region 212, and compressibility of the first buffer region 15 is less than compressibility of the second buffer region 16.

The electrode body 21 includes an electrode sheet, and the electrode sheet expands during the cycle of the electrode assembly 20. Moreover, the more the quantity of layers of electrode sheets, the greater expansion. The quantity of layers of electrode sheets in the first electrode region 211 in the first direction F1 is less than the quantity of layers of electrode sheets in the second electrode region 212 in the first direction F1, so expansion of the first electrode region 211 in the first direction F1 is less than expansion of the second electrode region 212 in the first direction F1.

By causing the first buffer region 15 with smaller compressibility to be opposite to the first electrode region 211 with smaller expansion, and causing the second buffer region 16 with larger compressibility to be opposite to the second electrode region 212 with greater expansion, the first electrode region 211 squeezes the first buffer region 15, and the second electrode region 212 squeezes the second buffer region 16. This effectively balances a difference in expansion forces corresponding to the first electrode region 211 and the second electrode region 212, ameliorates the problem of interface lithium precipitation or sodium precipitation caused by the non-uniform expansion force of the battery cell 100, balances a thickness difference between the first electrode region 211 and the second electrode region 212, and improves long-term cycle stability of the battery cell 100.

In some specific embodiments, as shown in FIG. 16, the electrode assembly 20 includes a positive electrode sheet 23, a negative electrode sheet 24, and a separator 25 disposed between the positive electrode sheet 23 and the negative electrode sheet 24. The first electrode region 211 includes the positive electrode sheet 23, the separator 25, and the negative electrode sheet 24 that are stacked. The second electrode region 212 includes the negative electrode sheet 24 and the separator 25 that are stacked, or the second electrode region 212 includes the negative electrode sheet 24.

When the positive electrode sheet 23, the negative electrode sheet 24, and the separator 25 are stacked and then wound to obtain the electrode assembly 20, the area of the negative electrode sheet 24 may be enabled to be greater than the area of the positive electrode sheet 23 to stagger a portion of the negative electrode sheet 24 from the positive electrode sheet 23, so that the staggered portion is formed as the second electrode region 212, and the unstaggered portion (that is, an overlapping portion) is formed as the first electrode region 211. The negative electrode sheet 24 has a large dimension, which is conducive to enabling the negative electrode sheet 24 to fully receive lithium ions provided by the positive electrode sheet 23, thereby fully exerting electrical performance of a positive electrode material and ameliorating the problem of lithium precipitation. The staggered portion expands less during the cycle process, and the unstaggered portion expands more during the cycle process. By causing the first buffer region 15 to be opposite to the first electrode region 211 and causing the second buffer region 16 to be opposite to the second electrode region 212, a thickness difference between the two regions can be balanced, the lithium precipitation problem is further ameliorated, and cycle stability is improved.

A compressibility difference between the first buffer region 15 and the second buffer region 16 can be flexibly adjusted by adjusting the quantity and arrangement positions of the through channels 14.

For example, in some embodiments, as shown in FIG. 13 and FIG. 14, the through channel 14 is disposed in the second buffer region 16. In other words, the first buffer region 15 is not provided with the through channel 14. Therefore, the compressibility of the second buffer region 16 is greater than the compressibility of the first buffer region 15, which is conducive to reducing the quantity of the through channels 14 and improving the support capability of the buffer member 10 while balancing the expansion force difference between different regions.

In some other embodiments, as shown in FIG. 15, a total volume of the through channels 14 in the first buffer region 15 is less than a total volume of the through channels 14 in the second buffer region 16.

The total volume of the through channels 14 refers to a sum of volumes of all the through channels 14 in the region. For example, in the embodiment in which the plurality of through channels 14 on the buffer member 10 have same structures and dimensions, the quantity of the through channels 14 in the first buffer region 15 may be less than the quantity of the through channels 14 in the second buffer region 16, so as to achieve a total volume difference, thereby achieving the compressibility difference in. Therefore, the compressibility of the second buffer region 16 is greater than the compressibility of the first buffer region 15, so that the first buffer region 15 can better adapt to expansion of the electrode assembly 20 in the later stage of the cycle while balancing the expansion force difference between different regions.

In some embodiments, as shown in FIG. 15, an equivalent aperture of the end opening of the through channel 14 is d. The equivalent aperture of the end opening is a diameter of a circle having a same area as the end opening.

In the first buffer region 15, a spacing W1 between the end openings of two adjacent through channels 14 is greater than or equal to 2d and less than or equal to 4d. In the second buffer region 16, a spacing W2 between the end openings of two adjacent through channels 14 is greater than or equal to d/3 and less than or equal to 2d.

Within the above spacing range, the through channels 14 of the second buffer region 16 are denser than the through channels 14 of the first buffer region 15, so that the compressibility of the second buffer region 16 is greater than the compressibility of the first buffer region 15. In addition, the end openings in the buffer regions are prevented from being arranged too densely to lead to weak structural strength of the corresponding buffer region, thereby ensuring support stability of the corresponding buffer region. In addition, the end openings are prevented from being arranged too sparsely to lead to failure to meet the requirements of the later stage of the cycle due to too low compressibility.

In some specific embodiments, a minimum distance between the end opening of the first buffer region 15 and an edge of the buffer member 10 is d/2, so that an edge region of the buffer member 10 has good structural strength and support stability, and the edge region can have a certain compressibility.

According to some embodiments of the present application, the first buffer region 15 has compressibility of not less than 40% at a pressure of 0.5 Mpa, compressibility of not less than 60% at a pressure of 0.8 Mpa, and compressibility of not less than 85% at a pressure of 1 Mpa. The second buffer region 16 has compressibility of not less than 20% at a pressure of 0.5 Mpa, compressibility of not less than 30% at a pressure of 0.8 Mpa, and compressibility of not less than 50% at a pressure of 1 Mpa.

The pressure of 0.5 Mpa, the pressure of 0.8 Mpa, and the pressure of 1 Mpa generally correspond to pressures on the buffer member 10 at an initial stage, a middle stage, and the later stage of the cycle of the electrode assembly 20, and the above pressures come from an expansion force of the electrode assembly 20 and a gas pressure inside the housing 30. Of course, the above values are not intended to limit the actual pressures on the buffer member 10 at the initial stage, the middle stage, and the later stage of the cycle of the electrode assembly 20, but indicate that when the compressibility of the first buffer region 15 and the second buffer region 16 satisfies the above conditions at the above pressures, the requirements of the electrode assembly 20 for the compressibility at the initial stage, the middle stage, and the later stage of the cycle can be satisfied. In fact, different cycle duration and different specific positions on the buffer member 10 cause different pressures, for example, at the initial stage of the cycle, the actual pressure on the first buffer region 15 may vary within a certain range around 0.5 Mpa.

The compressibility of the first buffer region 15 and the second buffer region 16 satisfies the above ratio range at the above different pressures, so that the first buffer region 15 and the second buffer region 16 can effectively balance the expansion force difference between different regions of the electrode assembly 20 in the entire cycle period, thereby improving long-term cycle stability of the battery cell 100.

The quantity and relative positions of the first buffer region 15 and the second buffer region 16 may be flexibly set based on an actual situation of the electrode assembly 20. In some embodiments, the through channel 14 penetrates through the buffer member 10 in the first direction F1, there are two first buffer regions 15, and the two first buffer regions 15 are respectively located on two sides of the second buffer region 16 in the second direction F2, and the first direction F1 intersects the second direction F2.

For example, as shown in FIG. 14 and FIG. 15, the through channel 14 penetrates through the buffer member 10 in a thickness direction of the buffer member 10, that is, a left-right direction, and the first buffer regions 15 are respectively disposed on upper and lower sides of the second buffer region 16.

The above arrangement manner of the first buffer regions 15 and the second buffer region 16 can satisfy the thickness difference that an expansion force at both ends is small and an expansion force in the middle is large in the second direction F2, and correspondingly, the electrode assembly 20 may adopt a structure with the second electrode region 212 in the middle and the first electrode regions 211 at two sides in the second direction F2, so that both ends of the electrode assembly 20 can fully exert electrical performance.

In some embodiments in which there are two first buffer regions 15 and the two first buffer regions 15 are respectively located on the two sides of the second buffer region 16 in the second direction F2, as shown in FIG. 13 and FIG. 14, in the second direction F2, a dimension of the first buffer region 15 is H1, a dimension of the second buffer region 16 is H2, and a dimension of the electrode body 21 is H3.

In an embodiment in which the end opening is not formed in the first buffer region 15, as shown in FIG. 13, the dimension H1 of the first buffer region 15 is a minimum distance between the end openings in the second buffer region 16 and the edge of the buffer member 10, and the dimension H2 of the second buffer region 16 is a spacing between ends that are of the two end openings at two ends of the second buffer region 16 in the second direction F2 and that are away from each other in the second direction F2. In an embodiment in which the end opening is formed in the first buffer region 15, as shown in FIG. 14, a boundary between the first buffer region 15 and the second buffer region 16 passes through a midpoint of a region between two end openings closest to each other in the first buffer region 15 and the second buffer region 16.

H3 - (H2 + 2H1) is greater than or equal to -2.5 mm and less than or equal to 14.5 mm, and H1 is greater than or equal to 3.5 mm and less than or equal to 5.5 mm. If a dimension of the buffer member 10 in the second direction F2 is too large, the buffer member 10 may excessively extend beyond an edge of the electrode body 21, and the buffer member 10 is high in cost, occupies space, and is prone to interference with another structure. If the dimension of the buffer member 10 in the second direction F2 is too small, the electrode body 21 may excessively extend beyond the edge of the buffer member 10, and the buffer member 10 cannot sufficiently support an expansion-prone region of the electrode body 21. A too large dimension of the first buffer region 15 in the second direction F2 leads to a poor balance effect on expansion forces at a middle region of the electrode assembly 20, and a too small dimension of the first buffer region 15 in the second direction F2 leads to weak overall strength of the buffer member 10.

Within the above value range, the buffer member 10 can provide stable support for the expansion-prone region of the electrode body 21, and provide more accurate support and buffering for a region with a larger expansion force and a region with a smaller expansion force, which is conducive to reducing the volume of the buffer member 10 and reducing the occupied space and cost.

For example, in some specific embodiments, H3 - (H2 + 2H1) may be -2 mm, -1 mm, 0 mm, 1 mm, 3 mm, 5 mm, 8 mm, 10 mm, 12 mm, 14 mm, or the like. H1 may be 3.5 mm, 4 mm, 4.5 mm, 5 mm, 5.5 mm, or the like.

**In** some specific embodiments, H3 - (H2 + 2H1) is greater than or equal to 6.5 mm and less than or equal to 10 mm. In this way, comprehensive support and buffering effect of the buffer member 10 on the electrode body 21 are further improved, and the effect of reducing the space occupied by the buffer member 10 is better.

In some embodiments of the present application, referring to FIG. 13 to FIG. 15, the buffer member 10 is disposed on a side surface of the electrode assembly 20 in the first direction F1, and the electrode assembly 20 includes an electrode body 21 and a tab 22 disposed at an end of the electrode body 21. The electrode body 21 includes a third electrode region and a fourth electrode region, and a thickness of an electrode sheet of the electrode assembly 20 in the third electrode region is less than a thickness in the fourth electrode region. The buffer member 10 has a third buffer region 17 and a fourth buffer region 18, the third buffer region 17 is disposed corresponding to the third electrode region, the fourth buffer region 18 is disposed corresponding to the fourth electrode region, and compressibility of the third buffer region 17 is less than compressibility of the fourth buffer region 18.

The electrode body 21 includes an electrode sheet, and the electrode sheet expands during the cycle of the electrode assembly 20. In addition, the larger the thickness of the electrode sheet, the greater expansion. The thickness of the third electrode region in the first direction F1 is less than the thickness of the fourth buffer region 18 in the first direction F1. Therefore, expansion of the third electrode region in the first direction F1 is less than expansion of the fourth buffer region 18 in the first direction F1.

By causing the third buffer region 17 with smaller compressibility to be opposite to the third electrode region with smaller expansion, and causing the fourth buffer region 18 with larger compressibility to be opposite to the fourth electrode region with greater expansion, the third electrode region squeezes the third buffer region 17, and the fourth electrode region squeezes the fourth buffer region 18. This effectively balances a difference in expansion forces corresponding to the third electrode region and the fourth electrode region, ameliorates the problem of interface lithium precipitation or sodium precipitation caused by the non-uniform expansion force of the battery cell 100, balances a thickness difference between the third electrode region and the fourth electrode region, and improves long-term cycle stability of the battery cell 100.

A compressibility difference between the third buffer region 17 and the fourth buffer region 18 may be flexibly adjusted by adjusting the quantity and arrangement positions of the through channels 14, and the adjustment manner is similar to that of the third buffer region 17 and the fourth buffer region 18, and details are not described herein again.

In some specific embodiments, the electrode sheet includes a current collector and an active material layer with which a surface of the current collector is coated. For example, the positive electrode sheet 23 includes a positive electrode current collector and a positive electrode active material layer, and the negative electrode sheet 24 includes a negative electrode current collector and a negative electrode active material layer. The thickness of the active material layer of the electrode sheet in the third electrode region is less than the thickness of the active material layer in the fourth electrode region. In a process of rolling the electrode sheet, the active material layer of the electrode sheet diffuses from the middle to both ends in a width direction and is accumulated at both ends of the electrode sheet in the width direction, the thickness of the active material layer of the electrode sheet in the third electrode region is less than the thickness of the active material layer in the fourth electrode region, and an accumulation compensation position is provided for the active material layer accumulated from the middle to both ends, so that the thickness of the active material layer at both ends of the rolled electrode sheet does not exceed the thickness at the middle position, and the accumulation amount of the active material layer at both ends is reduced. In addition, in the rolling process, a pressure on a portion of the electrode sheet that is located in the third electrode region is relatively small, so that a risk of peeling or falling off of the active material of the electrode sheet in the third electrode region is reduced, thereby reducing a possibility of cracks at the boundary between the portion of the electrode sheet that is located in the third electrode region and a portion of the electrode sheet that is located in the fourth electrode region.

It should be noted that, in the electrode assembly 20, the thickness of the positive electrode active material layer of the positive electrode sheet 23 in the third electrode region may be less than the thickness of the positive electrode active material layer of the positive electrode sheet 23 in the fourth electrode region, and the thickness of the negative electrode active material layer of the negative electrode sheet 24 in the third electrode region may be equal to the thickness of the negative electrode active material layer of the negative electrode sheet 24 in the fourth electrode region. Alternatively, the thickness of the positive electrode active material layer of the positive electrode sheet 23 in the third electrode region is equal to the thickness of the positive electrode active material layer of the positive electrode sheet 23 in the fourth electrode region, and the thickness of the negative electrode active material layer of the negative electrode sheet 24 in the third electrode region is less than the thickness of the negative electrode active material layer of the negative electrode sheet 24 in the fourth electrode region. Alternatively, the thickness of the positive electrode active material layer of the positive electrode sheet 23 in the third electrode region may be less than the thickness of the positive electrode active material layer of the positive electrode sheet 23 in the fourth electrode region, and the thickness of the negative electrode active material layer of the negative electrode sheet 24 in the third electrode region may be less than the thickness of the negative electrode active material layer of the negative electrode sheet 24 in the fourth electrode region.

The quantity and relative positions of the third buffer region 17 and the fourth buffer region 18 may be flexibly set based on an actual situation of the electrode assembly 20. In some embodiments, there are two third buffer regions 17, and the two third buffer regions 17 are respectively located on two sides of the fourth buffer region 18 in the second direction F2, and the first direction F1 intersects the second direction F2.

For example, as shown in FIG. 14 and FIG. 15, the through channel 14 penetrates through the buffer member 10 in the thickness direction of the buffer member 10, that is, the left-right direction, and the third buffer regions 17 are respectively disposed on upper and lower sides of the fourth buffer region 18.

The above arrangement manner of the third buffer regions 17 and the fourth buffer region 18 can satisfy the thickness difference that the expansion force at both ends is small and the expansion force in the middle is large in the second direction F2, and correspondingly, the electrode assembly 20 may adopt a structure with the fourth electrode region in the middle and the third electrode regions at two sides in the second direction F2, so that both ends of the electrode assembly 20 can fully exert electrical performance.

In the second direction F2, the dimension of the third buffer region 17 is H4, the dimension of the fourth buffer region 18 is H5, and the dimension of the electrode body 21 is H3. H3 - (H5 + 2H4) is greater than or equal to -2.5 mm and less than or equal to 20 mm, and H4 is greater than or equal to 1 mm and less than or equal to 10 mm. If a dimension of the buffer member 10 in the second direction F2 is too large, the buffer member 10 may excessively extend beyond an edge of the electrode body 21, and the buffer member 10 is high in cost, occupies space, and is prone to interference with another structure. If the dimension of the buffer member 10 in the second direction F2 is too small, the electrode body 21 may excessively extend beyond the edge of the buffer member 10, and the buffer member 10 cannot sufficiently support an expansion-prone region of the electrode body 21. If the dimension of the third buffer region 17 in the second direction F2 is too large, a balance effect on expansion forces at a middle region of the electrode assembly 20 is poor, and the active material of the electrode assembly 20 has less influence on the electrical performance. If the dimension of the third buffer region 17 in the second direction F2 is too small, overall strength of the buffer member 10 is weak, and the active material layer is prone to be excessively accumulated at both ends in the process of rolling the electrode assembly 20.

Within the above value range, the buffer member 10 can provide stable support for the expansion-prone region of the electrode body 21, and provide more accurate support and buffering for a region with a larger expansion force and a region with a smaller expansion force, which is conducive to reducing the volume of the buffer member 10 and reducing the occupied space and cost. In addition, the electrical performance of the electrode assembly 20 is also considered, and accumulation of the active material in the rolling process is reduced.

For example, in some specific embodiments, H3 - (H5 + 2H4) may be -2 mm, -1 mm, 0 mm, 1 mm, 3 mm, 5 mm, 8 mm, 10 mm, 15 mm, 18 mm, 20 mm, or the like. H4 may be 1 mm, 3 mm, 5 mm, 7 mm, 10 mm, or the like.

In some specific embodiments, H3 - (H5 + 2H4) is greater than or equal to 6.5 mm and less than or equal to 13 mm. In this way, comprehensive support and buffering effect of the buffer member 10 on the electrode body 21 are further improved, and the effect of reducing the space occupied by the buffer member 10 is better.

In the embodiment of the present application, an arrangement position of the buffer member 10 relative to the electrode assembly 20 may be flexibly set based on the structure of the electrode assembly 20.

For example, according to some embodiments of the present application, the electrode assembly 20 includes a plurality of electrode sheets that are wound, an outer peripheral surface of the electrode assembly 20 includes a straight portion 26 and a curved portion 27 connected to an end of the straight portion 26, and at least one of the straight portion 26 and the curved portion 27 is disposed opposite to the buffer member 10.

The plurality of electrode sheets that are wound, that is, the positive electrode sheet 23 and the negative electrode sheet 24, are stacked and then wound around a set axis to form the electrode assembly 20. The straight portion 26 refers to a portion of the electrode sheet that extends along a plane when being wound. The curved portion 27 refers to a portion of the electrode sheet that extends along an arc surface when being wound. For example, as shown in FIG. 3, a left side surface and a right side surface of the electrode assembly 20 are formed as straight portions 26, and left and right ends of a front side surface and a rear side surface are formed as curved portions 27, or the front side surface and the rear side surface may be integrally formed as the curved portion 27.

The straight portion 26 is disposed opposite to the buffer member 10, so that the buffer member 10 can buffer a region that is of the electrode assembly 20 and that corresponds to the straight portion 26. The curved portion 27 is disposed opposite to the buffer member 10, so that a region that is of the buffer member 10 and that faces the curved portion 27 is substantially formed into an arc shape, so that the buffer member 10 can buffer an expansion force of the curved portion 27, and reduce a risk of bridge breakage and lithium precipitation of the electrode assembly 20.

According to some other embodiments of the present application, the electrode assembly 20 includes a plurality of positive electrode sheets 23 and a plurality of negative electrode sheets 24 that are stacked in the first direction F1. That is, both the positive electrode sheets 23 and the negative electrode sheets 24 extend along a plane perpendicular to the first direction F1, and all the positive electrode sheets 23 and all the negative electrode sheets 24 of the electrode assembly 20 are stacked. The electrode assembly 20 with the above structure expands in the first direction F1 during use. Therefore, the buffer member 10 is disposed opposite to a surface on at least one side of the electrode assembly 20 in the first direction F1. In this way, the buffer member 10 can effectively buffer and support the electrode assembly 20, and the buffer member 10 requires a small area, resulting in low cost.

In some embodiments, as shown in FIG. 13, the end opening of the through channel 14 is formed on the pressure bearing surface 13 of the buffer member 10, and the pressure bearing surface 13 is a surface of the buffer member 10 facing or facing away from the electrode assembly 20. A stacking direction of the electrode sheets in a region of the electrode assembly 20 opposite to the pressure bearing surface 13 is perpendicular to the pressure bearing surface 13.

Here, the region of the electrode assembly 20 opposite to the pressure bearing surface 13, for example, in a wound electrode assembly 20, refers to the region corresponding to the straight portion 26, and the stacking direction of the positive electrode sheet 23 and the negative electrode sheet 24 is perpendicular to the pressure bearing surface 13. For another example, in a stacked electrode assembly 20, the plurality of positive electrode sheets 23 and the plurality of negative electrode sheets 24 are stacked in the first direction F1, and the pressure bearing surface 13 is perpendicular to the first direction F1.

During use, the electrode sheets are more prone to expand in the stacking direction. By causing the stacking direction of the electrode sheets in the region opposite to the pressure bearing surface 13 to be perpendicular to the pressure bearing surface 13, the pressure bearing surface 13 can more fully provide buffering and support for the electrode sheets, thereby improving the effect of reducing wrinkling of the electrode sheets.

In some embodiments, as shown in FIG. 3 to FIG. 7, the buffer member 10 and the electrode assembly 20 are arranged in the first direction F1, and surfaces of the electrode assembly 20 on both sides in the first direction F1 are largest-area surfaces.

For the electrode assembly 20, the larger the area, the more prone the electrode assembly 20 is to expansion and deformation. By causing the buffer member 10 to face the largest-area surfaces of the electrode assembly 20, the buffer member 10 can provide support in the region of the electrode assembly 20 that is more prone to expand and deform, and can be compressed for avoidance to effectively reduce the expansion force. In addition, this is conductive to reducing a usage amount of the buffer member 10, thereby reducing costs, reducing the occupied space, and improving an energy density.

Of course, according to actual needs, the buffer member 10 may alternatively be disposed on a non-largest-area surface of the electrode assembly 20, for example, the buffer members 10 are correspondingly disposed on both sides in the third direction F3.

The present application is further described below in conjunction with some embodiments and comparative examples.

### Cycle retention rate test method

A cycle retention rate test is performed by using two steel plates or an aluminum plate clamp, and a clamp force is 3000 N. A sensor is used to monitor a value of an expansion force on a large surface. In a constant temperature environment of 25°C, first charging and discharging is performed, constant current and constant voltage charging (charging to a current of 0.05 C) is performed at a charging current of 1.0 C (that is, a current value of a theoretical capacity is completely discharged in 1 hour) until an upper limit voltage reaches 4.25 V, and after standing for 5 minutes, constant current discharging is performed at a discharging current of 1.0 C until a final voltage is 2.8 V, and a discharge capacity at the first cycle is recorded. Then, a continuous charge and discharge cycle is performed. Capacity retention rate at the n^{th} cycle = (discharge capacity at the n^{th} cycle/discharge capacity at the first cycle) × 100.

### First cycle of interface wrinkling situation identification:

After assembly, electrolyte injection, and high-temperature standing, the battery cell 100 undergoes a formation process in a constant temperature environment of 45°C. Constant current charging is performed at a charging current of 0.1 CC (that is, a current value of a theoretical capacity is completely discharged in 1 hour) until a voltage is 3.4 V, then constant current charging is performed at a charging current of 0.33 C until a voltage is 4.2 V, and constant voltage charging proceeds until a current is 0.05 C. In this case, the battery 1000 is in a fully charged state. After the fully charged battery cell 100 is left to stand for 5 minutes, the fully charged battery cell 100 is disassembled, and the wrinkling situation at an anode interface is observed.

### Compressibility test method:

A sample with a dimension of 46 * 50 mm is taken and subjected to a compression test at 0.5 mm/min, and a change in thickness is recorded in real time until a recorded pressure value reaches 1 Mpa, to obtain a change in compressibility.

### Embodiment 1:

As shown in FIG. 5, the battery cell 100 includes a housing 30, two electrode assemblies 20, and a buffer member 10, and the buffer member 10 is disposed between the two electrode assemblies 20. An area proportion of end openings on a same-side surface of the buffer member 10 is 20%, and the equivalent diameter of the end opening is 8 mm. The compressibility is 5% at 0.3 Mpa (the support effect is strong in the early stage), and the compressibility is 85% at 1 Mpa (space occupation is minimized in the later stage). The rated capacity of the battery cell 100 is 100 Ah.

### Embodiment 2:

Embodiment 2 differs from Embodiment 1 in that an area proportion of end openings on a same-side surface of the buffer member 10 is 7%, and the equivalent diameter of the end opening is 4 mm. The compressibility is 5% at 0.3 MPa and 60% at 1 MPa (which does not affect the support effect in the early stage, but the residual thickness is large in the later stage).

### Embodiment 3:

Embodiment 3 differs from Embodiment 1 in that an area proportion of end openings on a same-side surface of the buffer member 10 is 35%, and the equivalent diameter of the end opening is 15 mm. The compressibility is 40% at 0.3 Mpa (the support effect is poor and even there is no support effect in the early stage), and the compressibility is 95% at 1 Mpa.

### Comparative example 1:

Comparative Example 1 differs from Example 1 in that the buffer member is not provided with a through channel. The compressibility is 5% at 0.3 Mpa (the support effect is strong in the early stage), and the compressibility is 50% at 1 Mpa.

The first cycle of interface wrinkling situation identification and cycle retention rate test are performed in Embodiments 1-3 and Comparative Example 1, and expansion force data is recorded in real time until the capacity is attenuated to 90% SOH. The test results are illustrated in Table 1.

**Table 1**

| No. | Battery cell expansion force | Cycle retention rate% | Interface wrinkling situation |
|---|---|---|---|
| Comparative Example 1 | 9000 N | 88% | Large surface penetrating wrinkling |
| Embodiment 1 | 6500 N | 92% | No wrinkling |
| Embodiment 2 | 7500 N | 90% | Large surface slight wrinkling |
| Embodiment 3 | 7000 N | 90% | Large surface non-penetrating wrinkling |

It can be seen from comparison of the test results in Table 1 that disposing the buffer member 10 and disposing the through channel 14 on the buffer member 10 can ensure the support effect of the buffer member 10 in the early stage and increase the compressibility of the buffer member 10, thereby reducing the space occupied by the buffer member 10 in the later stage of the cycle, ameliorating the problem of interface wrinkling, and improving the cycle retention rate and long-term cycle stability of the battery cell 100.

Referring to FIG. 17, a battery 1000 according to an embodiment of a third aspect of the present application includes the battery cell 100 according to the embodiment of the second aspect of the present application. Therefore, by adopting the battery cell 100 described above, the buffer member 10 can provide a good support effect for the electrode assembly 20 when expansion of the electrode assembly 20 is small, to reduce deformation of the electrode sheet and ameliorate the electrode sheet wrinkling phenomenon caused by expansion of the electrode assembly 20, thereby alleviating the problem of lithium precipitation or sodium precipitation of the electrode assembly 20 during the cycle and improving performance of the battery cell 100. In addition, the through channel 14 is disposed to increase the compressibility of the buffer member 10, so that the buffer member 10 can be effectively compressed to reduce the occupied space when the electrode assembly 20 expands greatly. A buffering effect balances expansion, and deformation of the electrode assembly 20 is accommodated, so that the expansion force is less prone to be too large to cause the problem of interface lithium precipitation or sodium precipitation, and the electrode sheet is also less prone to deform to cause lithium precipitation or sodium precipitation, thereby effectively improving cycle performance of the battery cell 100.

An electrical apparatus 2000 according to an embodiment of a fourth aspect of the present application includes the battery 1000 the above embodiment of the present application, where the battery 1000 is configured to provide electric energy to the electrical apparatus 2000. Therefore, by adopting the battery 1000 described above, the buffer member 10 can provide a good support effect for the electrode assembly 20 when expansion of the electrode assembly 20 is small, to reduce deformation of the electrode sheet and ameliorate the electrode sheet wrinkling phenomenon caused by expansion of the electrode assembly 20, thereby alleviating the problem of lithium precipitation or sodium precipitation of the electrode assembly 20 during the cycle and improving performance of the battery cell 100. In addition, the through channel 14 is disposed to increase the compressibility of the buffer member 10, so that the buffer member 10 can be effectively compressed to reduce the occupied space when the electrode assembly 20 expands greatly. A buffering effect balances expansion, and deformation of the electrode assembly 20 is accommodated, so that the expansion force is less prone to be too large to cause the problem of interface lithium precipitation or sodium precipitation, and the electrode sheet is also less prone to deform to cause lithium precipitation or sodium precipitation, thereby effectively improving cycle performance of the battery cell 100.

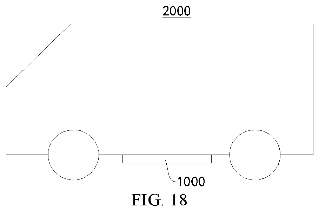

Optionally, as shown in FIG. 18, when the battery 1000 is used in a vehicle, the battery 1000 may be disposed at the bottom, head, or tail of the vehicle. The battery 1000 may be configured to power the vehicle, for example, the battery 1000 may be used as an operating power source of the vehicle. The vehicle may further include a controller and a motor, where the controller is configured to control the battery 1000 to power the motor, for example, for a working power requirement of the vehicle during starting, navigating, and driving.

It should be noted that, without contradictory, the embodiments in the present application may be combined with the features in the embodiments.

The above descriptions are merely preferred embodiments of the present application, and are not intended to limit the present application. For a person skilled in the art, various modifications and changes may be made to the present application. Any modification, equivalent replacement, or improvement made without departing from the spirit and principle of the present application shall fall within the protection scope of the present application.

## Claims

1. A buffer member, used inside a battery cell, wherein the battery cell comprises an electrode assembly, and the buffer member comprises:
a first surface and a second surface that are disposed opposite to each other; and
a through channel penetrating through the first surface and the second surface, wherein
the buffer member is compressible for buffering expansion of the electrode assembly, and the through channel is configured to increase compressibility of the buffer member.

2. The buffer member according to claim 1, wherein the buffer member has a pressure bearing surface facing or facing away from the electrode assembly, and the first surface and/or the second surface are/is the pressure bearing surface.

3. The buffer member according to claim 1 or 2, wherein a total opening area of an end opening that is of the through channel and that is formed on a same-side surface is S1, an area of the corresponding surface is S2, and S1 and S2 satisfy: S1/S2 is greater than or equal to 5% and less than or equal to 80%.

4. The buffer member according to claim 3, wherein S1 and S2 further satisfy: S1/S2 is greater than or equal to 20% and less than or equal to 50%.

5. The buffer member according to any one of claims 1 to 4, wherein an equivalent diameter of an end opening of the through channel is greater than or equal to 2 mm and less than or equal to 20 mm.

6. The buffer member according to claim 5, wherein the equivalent diameter of the end opening is greater than or equal to 5 mm and less than or equal to 10 mm.

7. The buffer member according to any one of claims 1 to 6, wherein there are a plurality of through channels, and at least two of the through channels intersect and communicate with each other.

8. The buffer member according to any one of claims 1 to 6, wherein there are a plurality of through channels, and the plurality of through channels are spaced apart from each other.

9. The buffer member according to claim 8, wherein the plurality of through channels all extend in a first direction, and the plurality of through channels are arranged in an array perpendicular to the first direction.

10. The buffer member according to any one of claims 1 to 9, wherein the buffer member comprises a first buffer region and a second buffer region, and at a same pressure, compressibility of the second buffer region is greater than compressibility of the first buffer region.

11. The buffer member according to claim 10, wherein the through channel is disposed in the second buffer region, or a total volume of the through channel in the first buffer region is less than a total volume of the through channel in the second buffer region.

12. The buffer member according to claim 11, wherein an equivalent aperture of the end opening of the through channel is d, in the first buffer region, a spacing between end openings of two adjacent through channels is greater than or equal to 2d and less than or equal to 4d, and in the second buffer region, a spacing between end openings of two adjacent through channels is greater than or equal to d/3 and less than or equal to 2d.

13. The buffer member according to any one of claims 10 to 12, wherein
the first buffer region has compressibility of not less than 40% at a pressure of 0.5 Mpa, compressibility of not less than 60% at a pressure of 0.8 Mpa, and compressibility of not less than 85% at a pressure of 1 Mpa; and
the second buffer region has compressibility of not less than 20% at a pressure of 0.5 Mpa, compressibility of not less than 30% at a pressure of 0.8 Mpa, and compressibility of not less than 50% at a pressure of 1 Mpa.

14. The buffer member according to any one of claims 10 to 13, wherein the through channel penetrates through the buffer member in the first direction, there are two first buffer regions, the two first buffer regions are respectively located on two sides of the second buffer region in a second direction, and the first direction intersects the second direction.

15. A battery cell, comprising a housing, an electrode assembly, and the buffer member according to any one of claims 1 to 14, wherein both the buffer member and the electrode assembly are disposed in the housing.

16. The battery cell according to claim 15, wherein
the electrode assembly comprises a plurality of electrode sheets that are wound, an outer peripheral surface of the electrode assembly comprises a straight portion and a curved portion connected to an end of the straight portion, and at least one of the straight portion and the curved portion is disposed opposite to the buffer member; or
the electrode assembly comprises a plurality of positive electrode sheets and a plurality of negative electrode sheets that are stacked in a first direction, and the buffer member is disposed opposite to a surface on at least one side of the electrode assembly in the first direction.

17. The battery cell according to claim 15 or 16, wherein there are a plurality of electrode assemblies arranged in the first direction, and the buffer member is disposed between two adjacent electrode assemblies, and/or the buffer member is disposed between the electrode assembly and the housing.

18. The battery cell according to any one of claims 15 to 17, wherein an end opening of the through channel is formed on a pressure bearing surface of the buffer member, and in a region that is of the electrode assembly and that is opposite to the pressure bearing surface, a stacking direction of electrode sheets is perpendicular to the pressure bearing surface.

19. The battery cell according to any one of claims 15 to 18, wherein the buffer member and the electrode assembly are arranged in the first direction, and surfaces on two sides of the electrode assembly in the first direction are largest-area surfaces.

20. The battery cell according to any one of claims 15 to 19, wherein the buffer member is disposed on a side surface of the electrode assembly in the first direction, the electrode assembly comprises an electrode body and a tab disposed at an end of the electrode body, the electrode body comprises a first electrode region and a second electrode region, a quantity of layers of electrode sheets in the first electrode region in the first direction is less than a quantity of layers of electrode sheets in the second electrode region in the first direction, the buffer member has a first buffer region and a second buffer region, the first buffer region is disposed corresponding to the first electrode region, the second buffer region is disposed corresponding to the second electrode region, and compressibility of the first buffer region is less than compressibility of the second buffer region.

21. The battery cell according to claim 20, wherein there are two first buffer regions, the two first buffer regions are respectively located on two sides of the second buffer region in a second direction, the first direction intersects the second direction, and
in the second direction, a dimension of the first buffer region is H1, a dimension of the second buffer region is H2, and a dimension of the electrode body is H3, wherein H3 - (H2 + 2H1) is greater than or equal to -2.5 mm and less than or equal to 14.5 mm, and H1 is greater than or equal to 3.5 mm and less than or equal to 5.5 mm.

22. The battery cell according to claim 21, wherein H3 - (H2 + 2H1) is greater than or equal to 6.5 mm and less than or equal to 10 mm.

23. The battery cell according to any one of claims 20 to 22, wherein the electrode assembly comprises a positive electrode sheet, a negative electrode sheet, and a separator disposed between the positive electrode sheet and the negative electrode sheet, the first electrode region comprises the positive electrode sheet, the separator, and the negative electrode sheet that are stacked; and the second electrode region comprises the negative electrode sheet and the separator that are stacked, or the second electrode region comprises the negative electrode sheet.

24. The battery cell according to any one of claims 15 to 19, wherein the buffer member is disposed on a side surface of the electrode assembly in the first direction, the electrode assembly comprises an electrode body and a tab disposed at an end of the electrode body, the electrode body comprises a third electrode region and a fourth electrode region, a thickness of an electrode sheet of the electrode assembly in the third electrode region is less than a thickness in the fourth electrode region, the buffer member has a third buffer region and a fourth buffer region, the third buffer region is disposed corresponding to the third electrode region, the fourth buffer region is disposed corresponding to the fourth electrode region, and compressibility of the third buffer region is less than compressibility of the fourth buffer region.

25. The battery cell according to claim 24, wherein there are two third buffer regions, the two third buffer regions are respectively located on two sides of the fourth buffer region in a second direction, the first direction intersects the second direction, and
in the second direction, a dimension of the third buffer region is H4, a dimension of the fourth buffer region is H5, and a dimension of the electrode body is H3, wherein H3 - (H5 + 2H4) is greater than or equal to -2.5 mm and less than or equal to 20 mm, and H4 is greater than or equal to 1 mm and less than or equal to 10 mm.

26. The battery cell according to claim 25, wherein H3 - (H5 + 2H4) is greater than or equal to 6.5 mm and less than or equal to 13 mm.

27. A battery, comprising the battery cell according to any one of claims 1 to 26.

28. An electrical apparatus, comprising the battery according to claim 27, wherein the battery is configured to provide electric energy to the electrical apparatus.
